# EUROPÄISCHE PATENTSCHRIFT

(11) **EP 2 146 915 B1**
(45) Veröffentlichungstag und Bekanntmachung des Hinweises auf die Patenterteilung: **08.02.2012**
(21) Anmeldenummer: 08735167.2
(22) Anmeldetag: 11.04.2008
(51) Int. Cl.: B65H 29/00, F16D 7/02

(54) **ROLLENSPEICHER FÜR BLATTFÖRMIGE GEGENSTÄNDE**
ROLLER STORAGE SYSTEM FOR SHEET-TYPE OBJECTS
DISPOSITIF DE STOCKAGE À ROULEAUX UTILISÉ POUR DES OBJETS SOUS FORME DE FEUILLES

(30) Priorität: 14.05.2007 DE 102007022558
(43) Veröffentlichungstag der Anmeldung: 27.01.2010
(73) Patentinhaber: Wincor Nixdorf International GmbH, 33106 Paderborn (DE)
(72) Erfinder: MICHELS, André, 34434 Borgentreich-Grosseneder (DE)
(86) Internationale Anmeldenummer: PCT/EP2008/002859
(87) Internationale Veröffentlichungsnummer: WO 2008/138438

(56) Entgegenhaltungen:
- EP-A- 1 155 991
- EP-A1- 0 652 176
- EP-A1- 1 772 406
- WO-A-2004/081883
- DE-A1- 3 314 653

## Beschreibung

Die Erfindung geht aus von einem Rollenspeicher zum Speichern blattförmiger Gegenstände, insbesondere Banknoten.

Rollenspeicher werden neben Kassettenspeichern in Geldautomaten, Kassensystemen und sonstigen Geldverarbeitungssystemen, wie beispielsweise automatische Kassentresore und Geldrecyclingsysteme, eingesetzt. Rollenspeicher ermöglichen auf einfache und schnelle Weise das Einspeichern und Ausgeben von Banknoten, siehe z.B. EP 1772406 A1. Beim Befüllen oder Einspeichern des Rollenspeichers werden die Banknoten nacheinander auf die Wickeltrommel zwischen die Wickellagen einer oder zweier Folien gewickelt. Bei einer ersten Variante eines Rollenspeichers mit nur einem Speicherband werden die Banknoten zwischen den Wickellagen einer als Speicherband dienenden bandförmigen Folie gehalten. Bei einer zweiten Variante ist zusätzlich zu der ersten Folie eine zweite als Deckband dienende bandförmige Folie vorgesehen. Für die erste und zweite Folie sind eine erste und eine zweite Folientrommel räumlich getrennt voneinander in dem Rollenspeicher angeordnet. Die beiden Folien werden über je eine Umlenkrolle zusammengeführt. An den Umlenkrollen werden die blattförmigen Gegenstände beim Einspeichern zwischen die Folien eingeführt und beim Ausgeben aus den Folien entnommen. Von den Umlenkrollen ausgehend werden die beiden Folien aufeinanderliegend der Wickeltrommel zugeführt. Die blattförmigen Gegenstände werden somit zwischen der ersten und der zweiten Folie gehalten. Bei dem vorliegenden Rollenspeicher kann es sich um einen Rollenspeicher der ersten oder zweiten Variante handeln.

Zur Ausgabe der blattförmigen Gegenstände wird die Folie oder werden die Folien von der Wickeltrommel abgewickelt und auf die Folientrommeln aufgewickelt. Bei diesem Vorgang werden die blattförmigen Gegenstände von den Wickellagen freigegeben und können nacheinander entnommen werden. Die Ausgabe der blattförmigen Gegenstände erfolgt damit nach dem Prinzip "last in, first out" , siehe z.B. EP 1155991 A1, EP 0 652 176 A1.

Das Einspeichern und Ausgeben der blattförmigen Gegenstände erfolgt automatisch und mit hoher Geschwindigkeit. Dabei ist es von entscheidender Bedeutung, dass die blattförmigen Gegenstände durch die Folie oder die Folien in zuverlässiger Weise geführt und gehalten werden. Daher muss bei dem Hin- und Herspulen der Folie zwischen der Folientrommel und der Wickeltrommel trotz der Änderung der Folientransportrichtung gewährleistet sein, dass die Folie transportiert wird ohne Schlaufen zu bilden und ohne seitlich aus Ihrer Führung auszubrechen. Hierzu ist eine Folienspannung notwendig, die auch beim Umkehren der Folientransportrichtung und bei Schwankungen der Geschwindigkeit der Folie aufrecht erhalten bleibt.

Bekannt sind Rollenspeicher, bei denen die Folie zur Aufrechterhaltung der Folienspannung über Umlenk- oder Führungsrollen geführt wird, deren Achse gefedert gelagert ist. Hierdurch werden insbesondere Längendifferenzen ausgeglichen. Geschwindigkeitsschwankungen und die Umkehr der Folientransportrichtung können jedoch nicht kompensiert werden. Darüber hinaus gestalten Rollen mit gefedert gelagerten Achsen den Aufbau und die Herstellung des Rollenspeichers aufwändig. Sie sind außerdem anfällig gegen Verschleiß und müssen häufig ersetzt werden.

Der vorliegenden Erfindung liegt die Aufgabe zugrunde, einen gegen Verschleiß unempfindlichen Rollenspeicher zur Verfügung zu stellen, bei dem die Folienführung unempfindlich gegen das Berühren der Folien bei Beseitigung eines Belegstaus und zu Reinigungs- und Wartungszwecken ist, und bei dem die Folienspannung auch bei einer Umkehr der Folientransportrichtung und bei Schwankungen der Geschwindigkeit aufrecht erhalten bleibt.

Gegenüber den aus dem Stand der Technik bekannten Rollenspeichern hat der erfindungsgemäße Rollenspeicher mit den Merkmalen des Anspruchs 1 den Vorteil, dass entweder die Folientrommel oder die Wickeltrommel oder beide mit einer Hysteresekupplung zur Übertragung des Drehmoments von einem Motor auf die Folien- und/ oder die Wickeltrommel ausgestattet sind. Bei Hysteresekupplungen werden Drehmomente nicht über mechanische Verbindungen sondern mit Hilfe von Magnetkräften berührungsfrei übertragen. Im Unterschied zur Synchronkupplung, bei der sowohl auf der Antriebs- als auch auf der Abtriebsseite periodisch angeordnete Permanentmagnete vorgesehen sind, ist bei der Hysteresekupplung lediglich eine Kupplungshälfte mit periodisch angeordneten Permanentmagneten ausgestattet. Die zweite Hälfte der Kupplung besteht aus einem Ring oder einer Scheibe aus einem dauermagnetischen Werkstoff mit vergleichsweise großer Remanenz und Permeabilität und vergleichsweise kleiner Koerzitivfeldstärke. Dadurch kann die zweite Kupplungshälfte von der anderen gegen einen Widerstand ummagnetisiert werden. Ein Umpolen ist damit bei geringem Energieaufwand möglich. Wird das Nennmoment der Hysteresekupplung, welches von der magnetischen Kraft zwischen der ersten und zweiten Kupplungshälfte abhängt, überschritten, so beginnt die Kupplung durchzurutschen. Das übertragene Drehmoment bleibt daher auch bei Überlast konstant in Höhe des Nennmoments. Die Hysteresekupplung ist somit vollkommen verschleißfrei und wartungsarm. Welche der beiden Kupplungshälften mit der Antriebsseite verbunden wird, ist unerheblich.

Bei der ersten Variante von Rollenspeichern, bei der die blattförmigen Gegenstände zwischen den Wickellagen einer als Speicherband dienenden Folie gehalten werden, kann die Hysteresekupplung an der Folientrommel oder der Wickeltrommel angeordnet werden. In bevorzugter Weise wird die Folientrommel mit einer Hysteresekupplung ausgestattet, da die Folientrommel kleiner und handlicher ist als die Wickeltrommel und außerdem im Rollenspeicher mehr Platz an der Folientrommel zur Verfügung steht.

Bei der zweiten Variante eines Rollenspeichers, bei der zusätzlich zu der ersten Folie eine zweite als Deckband dienende bandförmige Folie vorgesehen ist, und bei der die blattförmigen Gegenstände auf der Wickeltrommel zwischen der ersten und der zweiten Folie gehalten sind, werden die Hysteresekupplungen in bevorzugter Weise an den Folientrommeln angeordnet. Dies gilt ebenso bei einer ersten Variante eines Rollenspeichers, bei der mehrere Speicherfolien nebeneinander auf- und abgewickelt werden, und bei der für jede Speicherfolie eine Folientrommel mit Antrieb vorgesehen ist. Ist jede der Folientrommeln mit einer Hysteresekupplung ausgestattet, so können Blockierungen der ersten Folie unabhängig von der zweiten Folie und eventuell weiteren Folien ausgeglichen werden. Dies ist bei einer Hysteresekupplung an der Wickeltrommel nicht möglich.

Der mit mindestens einer Hysteresekupplung ausgestattete Rollenspeicher hat den Vorteil, dass die Hysteresekupplung bei Auftreten einer Blockierung aufgrund eines Belegstaus oder anderer Ursachen durchrutscht, sobald das Drehmoment-der Blockierung größer ist als das Nennmoment der Hysteresekupplung. Dadurch wird eine Beschädigung des Motors vermieden. Nach Beseitigung der Ursachen für die Blockierung kann der Betrieb des Rollenspeichers fortgeführt werden, ohne dass die Hysteresekupplung neu eingestellt oder justiert werden muss. Ferner können Unterschiede der Geschwindigkeiten beziehungsweise Drehzahlen der Wickeltrommel und der Folientrommeln ausgeglichen werden, die von dem auf die jeweilige Trommel aufgewickelten Anteil an Folie bezogen auf die gesamte Länge der Folie abhängen.

In bevorzugter Weise ist die eine Kupplungshälfte der Hysteresekupplung mechanisch mit der Welle der Folientrommel oder der Wickeltrommel verbunden. Die andere Hälfte der Hysteresekupplung ist unmittelbar oder mittelbar mit der Folientrommel oder der Wickeltrommel verbunden.

Nach einer vorteilhaften Ausgestaltung der Erfindung ist an der Folientrommel eine Drehfeder angeordnet. Diese auf Drehung beanspruchte Feder wird bei Einwirkung einer Kraft auf die Folie ausgelenkt, ohne dass die Kraft als Drehmoment sofort auf die Welle und damit auf den Motor übertragen wird. Sie sorgt damit für eine Dämpfung. Dies ist insbesondere von Vorteil bei einem manuellen Berühren der Folie oder einem manuellen Drehen der Folientrommel zur Beseitigung eines Belegstaus, zu Reinigungs- oder Wartungszwecken und beim Auftreten hoher Beschleunigungskräfte bei einem Belegstau oder einer sonstigen Blockierung des Rollenspeichers. Ferner werden Geschwindigkeitsdifferenzen zwischen der Wickeltrommel und den Folientrommeln ausgeglichen. Dies gilt bei der zweiten Variante von Rollenspeicher auch für Geschwindigkeitsdifferenzen zwischen der als Speicherband dienenden ersten Folie oder der als Deckband dienenden zweiten Folie.

In bevorzugter Weise bilden die Hysteresekupplung und die Drehfeder an der Folientrommel eine Einheit. Hierzu ist eine Kupplungshälfte der Hysteresekupplung fest mit der Antriebswelle der Folientrommel verbunden. Die andere Kupplungshälfte der Hysteresekupplung ist an ein Ende der Drehfeder gekoppelt. Das andere Ende der Drehfeder ist mit der Folientrommel verbunden. Die Einheit aus Hysteresekupplung und Drehfeder bildet ein Feder-Dämpfersystem an der Folientrommel. Darüber hinaus besteht die Möglichkeit, dass die Wickeltrommel mit einer Hysteresekupplung und die Folientrommel mit einer Drehfeder ausgestattet ist, oder dass eine Kombination aus Hysteresekupplung und Drehfeder an der Wickeltrommel angeordnet ist. Bei der Drehfeder kann es sich beispielsweise um eine Schraubendrehfeder handeln.

Nach einer weiteren vorteilhaften Ausgestaltung der Erfindung ist die Folientrommel mit einem Kugellager ausgestattet. In diesem Fall ist eine Kupplungshälfte der Hysteresekupplung fest mit der Antriebswelle der Folientrommel verbunden. Die Antriebswelle erstreckt sich in axialer Richtung durch die Folientrommel hindurch. Da das Drehmoment der Antriebswelle über die Hysteresekupplung auf die Folientrommel übertragen wird, muss die Bewegung der Folientrommel gegenüber der durch sie hindurch geführten Antriebswelle möglichst reibungsarm erfolgen. Dies ist bei einem Kugellager gewährleistet. Eine sich durch die Folientrommel hindurch erstreckende Antriebswelle bietet den Vorteil, dass in axialer Richtung neben der ersten Folientrommel eine weitere Folientrommel auf der Antriebswelle angeordnet und durch diese zur Rotation angetrieben sein kann. Eine derartige Anordnung ist bei Rollenspeichern von Vorteil, mit denen Geldscheine in einer Ausrichtung quer zur Folien-Transportrichtung aufgewickelt werden. Dort werden bevorzugt anstelle von einer breiten Folie zwei schmale Folien zum Aufwickeln eingesetzt. Diese werden auf zwei separater Folientrommeln zugeführt und auf eine gemeinsame Wickeltrommel aufgewickelt. Beide Folientrommeln können in diesem Fall durch einen Motor und eine Antriebswelle gemeinsam zur Rotation angetrieben werden. In diesem Fall befindet sich an jeder Folientrommel eine Hysteresekupplung sowie eine Drehfeder, da eine Blockierung auch nur bei einer der beiden Folien auftreten kann.

Nach einer weiteren vorteilhaften Ausgestaltung der Erfindung ist der Rollenspeicher mit mindestens einer Umlenkrolle für die Folie ausgestattet. Die Umlenkrolle weist an ihren beiden Enden einen kleineren Druckmesser auf als in einem Bereich zwischen den beiden Enden. Die Umlenkrolle befindet sich im Belegeinlauf beziehungsweise Belegauslauf des Rollenspeichers, an welchem die blattförmigen Gegenstände der Wickeltrommel zugeführt oder von dieser abgeleitet werden. Um die Richtung der blattförmigen Gegenstände bei der Aufnahme in den Rollenspeicher und bei der Ausgabe aus dem Rollenspeicher möglichst exakt zu definieren und an die durch den Belegeinlauf und den Belegauslauf vorgegebene Richtung anzupassen, weist die Umlenkrolle oder weisen die Umlenkrollen einen möglichst großen Durchmesser auf. Sie beeinflussen daher die Folienführung in erheblichem Maße. Dieser Einfluss wird verstärkt durch einen relativ großen Abstand zwischen der Umlenkrolle und weiteren der Folienführung dienenden Rollen. Die Form der Umlenkrolle mit einem kleineren Durchmesser an den beiden Enden und einem größeren Durchmesser in einem Bereich zwischen den Enden wirkt sich positiv auf die Folienführung aus. Durch die von der Umlenkrolle auf die Folie ausgeübten Kräfte wird die Folie relativ zur Umlenkrolle zentriert. Ein Ausweichen der Folie zu den Seiten, sowie ein seitliches Ausbrechen der Folie aus der Führung wird dadurch automatisch verhindert. Ferner hat die Umlenkrolle mit der bauchigen Form den Vorteil, dass von der Umlenkrolle auf die Ränder der Folie eine geringere Kraft ausgeübt wird als bei Umlenkrollen mit zylindrischer Form. Dadurch wird die Gefahr reduziert, dass die Folie an den Rändern einreißt. Die Form der Umlenkrollen trägt damit dazu bei, dass der Rollenspeicher verschleißarm ist. In bevorzugter Weise beträgt der Unterschied zwischen dem kleinsten und dem größten Durchmesser zwischen 0,1% und 20% des größten Durchmessers der Umlenkrolle. Besonders bevorzugt beträgt der Unterschied zwischen 0,5% und 10%.

Nach einer weiteren vorteilhaften Ausgestaltung der Erfindung ist der Rollenspeicher mit mindestens einer Stützrolle und/ oder mindestens einer Führungsrolle für die Folie ausgestattet. Dabei weisen die Stützrolle und/ oder die Führungsrolle an den beiden Enden einen kleineren Durchmesser auf, als in einem Bereich zwischen den beiden Enden. Damit wird derselbe Effekt erzielt wie mit der oben beschriebenen Umlenkrolle. Üblicherweise sind die Durchmesser der Stützrollen und Führungsrollen kleiner als die Durchmesser der Umlenkrollen, da sie ausschließlich der Folienführung und nicht der Aufnahme oder Ausgabe von blattförmigen Gegenständen dienen. Der Unterschied zwischen dem größten und kleinsten Durchmesser der Stützrolle kann in demselben Bereich liegen wie der Unterschied des Durchmessers bei der Umlenkrolle.

Nach einer weiteren vorteilhaften Ausgestaltung der Erfindung weisen die Umlenkrolle und/ oder die Stützrolle und/oder die Führungsrolle eine nach außen gewölbte Oberfläche auf. In bevorzugter Weise sind die Rollen hinsichtlich der Manteloberfläche spiegelsymmetrisch zu einer Ebene, die sich senkrecht zu ihrer Drehachse durch die Mitte der Rolle erstreckt. Die Oberfläche der Rollen ist damit kanten- und fugenfrei. Durch die gewölbte runde Form der Oberfläche wird über einen breiten Bereich eine Kraft von der Rolle auf die Folie übertragen, welche zur Folienführung beiträgt. Aufgrund einer gewissen Elastizität legt sich die Folie dabei an die Umlenkrolle, die Stützrolle oder die Führungsrolle an.

Nach einer weiteren vorteilhaften Ausgestaltung der Erfindung sind die Umlenkrolle und/ oder die Stützrolle und/ oder die Führungsrolle aus zwei Kegeln oder Kegelstümpfen zusammengesetzt. Dies ermöglicht einen besonders einfachen und kostengünstigen Aufbau der betreffenden Rollen. Dieser Aufbau ist insbesondere bei den Stützrollen und Führungsrollen bevorzugt. Die Kegel oder Kegelstümpfe werden derart auf einer gemeinsamen Achse zusammengefügt, dass sie mit ihrer größeren Stirnseite einander zugewandt sind. Die Kegel oder Kegelstümpfe können innen hohl oder massiv ausgebildet sein.

Nach einer weiteren vorteilhaften Ausgestaltung sind die Umlenkrollen kugelgelagert. Die Kugellager haben den Vorteil einer geringen Reibung und damit eines geringen Verschleißes.

Nach einer weiteren vorteilhaften Ausgestaltung sind die Führungsrollen und Stützrollen gleitgelagert. Sie können damit kostengünstig hergestellt werden. Im Falle eines Verschleißes ist der Austausch schnell und einfach möglich.

Nach einer weiteren vorteilhaften Ausgestaltung der Erfindung besteht die Umlenkrolle zumindest an der Oberfläche des Mantels aus einem weichen gummiartigen Material. Dadurch wird eine erhöhte Reibung zwischen der Umlenkrolle und der Folie erzielt, was sich positiv auf die Folienführung auswirkt. Aufgrund des weichen gummiartigen Materials wird dennoch bei der Folienführung kein Abrieb der Folie erzeugt. Dadurch wird der Verschleiß der Folie minimiert. Das Material sollte trotz des erhöhten Reibungskoeffizienten eine gewisse Härte aufweisen, damit die sich die Umlenkrolle bei Kräfteinwirkung durch die Folie nicht oder allenfalls geringfügig verformen kann.

Weitere Vorteile und vorteilhafte Ausgestaltungen der Erfindung sind der nachfolgenden Beschreibung, der Zeichnung und den Ansprüchen zu entnehmen.

In der Zeichnung ist ein Ausführungsbeispiel der Erfindung dargestellt. Es zeigen:
- Figur 1: Schematische Darstellung eines Rollenspeichers in Seitenansicht,
- Figur 2: Ansicht der Umlenkrollen und der Stützrollen des Rollenspeichers gemäß Figur 1 in einer Ansicht von vorne,
- Figur 3: Antriebswelle mit zwei ersten Folientrommeln des Rollenspeichers gemäß Figur 1,
- Figur 4: Hysteresekupplung der beiden Folientrommeln gemäß Figur 3.

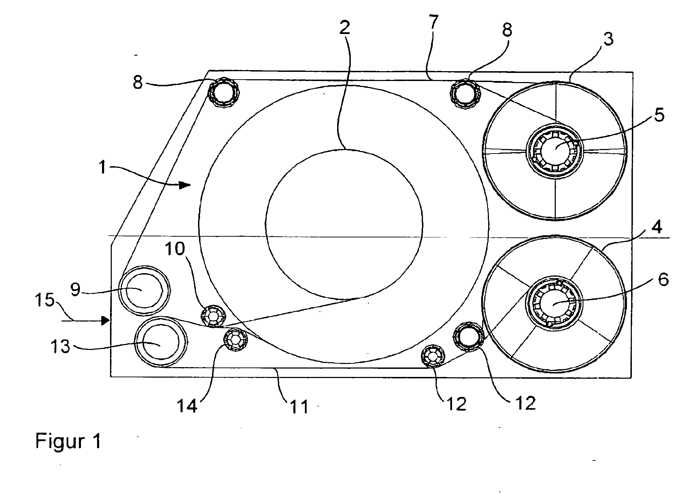

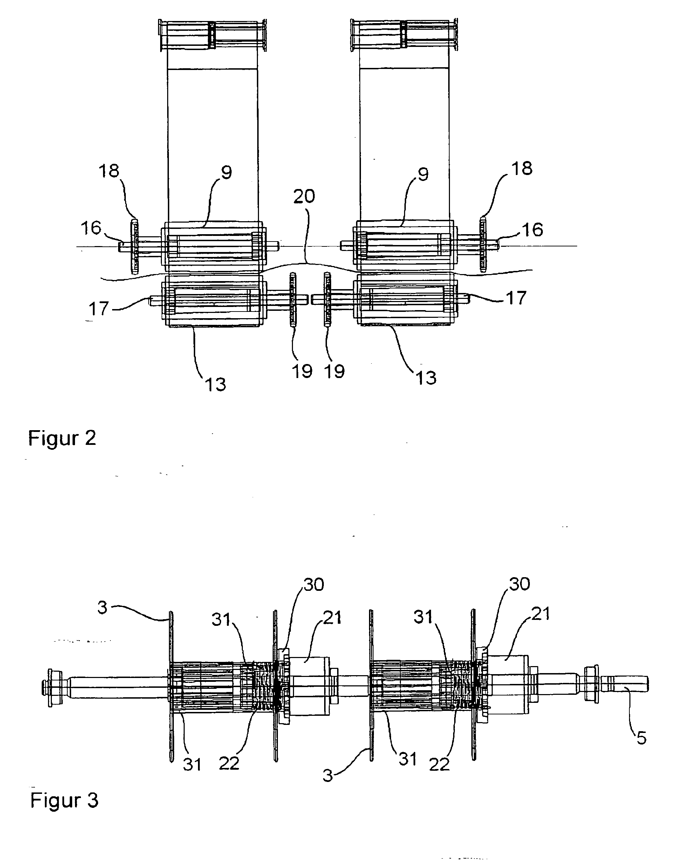

In Figur 1 ist ein Rollenspeicher in einer Seitenansicht bei geöffnetem Gehäuse vereinfacht dargestellt. In der Mitte befindet sich eine Wickeltrommel 1 mit einem Wickelkern 2. Der äußere Kreis um den Wickelkern 2 deutet den Umfang der Wickeltrommel 1 in gefülltem Zustand an. Rechts von der Wickeltrommel 1 sind zwei erste Folientrommeln 3 und zwei zweite Folientrommeln 4 dargestellt. Die beiden ersten Folientrommeln 3 sind in axialer Richtung nebeneinander auf der Antriebswelle 5 angeordnet. Dies ist in Figur 3 dargestellt. Die beiden zweiten Folientrommeln 4 sind entsprechend in axialer Richtung nebeneinander auf der Antriebswelle 6 angeordnet. Da die Blickrichtung in Figur 1 der Ausrichtung der Antriebswellen 5 und 6 entspricht, ist in Figur 1 jeweils nur die dem Betrachter zugewandte Folientrommel erkennbar. Die beiden Antriebswellen 5 und 6 sind mit einem oder mit zwei in der Zeichnung nicht dargestellten Motoren verbunden. Auf jede der beiden ersten Folientrommeln 3 ist eine erste Folie 7 aufgewickelt, die über zwei Führungsrollen 8, eine erste Umlenkrolle 9 und eine Stützrolle 10 zur Wickeltrommel 1 geführt ist. Genau wie die beiden ersten Folientrommeln 3 sind die beiden ersten Folien 7, die Führungsrollen 8, die beiden Umlenkrollen 9 und die beiden Stützrollen 10 nebeneinander angeordnet, so dass für den Betrachter in Figur 1 jeweils nur eine der genannten Rollen und Folien erkennbar ist. Auf die beiden zweiten Folientrommeln 4 ist jeweils eine zweite Folie 11 aufgewickelt, welche über zwei Führungsrollen 12, eine zweite Umlenkrolle 13 und eine zweite Stützrolle 14 der Wickeltrommel 1 zugeführt sind. Die Achsen der Wickeltrommel 1, der ersten Folientrommeln 3, der zweiten Folientrommeln 4, der Führungsrollen 8 und 12, der Umlenkrollen 9 und 13 und der Stützrollen 10 und 14 verlaufen parallel. Bei den beiden Umlenkrollen 9 und 13 werden die ersten Folien 7 und die zweiten Folien 11 derart zusammengeführt, dass in dem Abschnitt zwischen den beiden Umlenkrollen 9 und 13 und der Wickeltrommel 1 jeweils eine erste Folie 7 auf einer zweiten Folie 11 liegt. Dies gilt entsprechend für die beiden parallel nebeneinander verlaufenden Folienpaare aus jeweils einer ersten und einer zweiten Folie 7 und 11. Im folgenden wird zur Vereinfachung der Transport nur für ein Folienpaar aus einer ersten und zweiten Folie 7 und 11 beschrieben. Der Transport durch das andere Folienpaar erfolgt auf exakt die gleiche Weise. Der Belegeinlauf von in Figur 1 nicht dargestellten blattförmigen Gegenständen erfolgt in horizontaler Richtung gemäß dem in Figur 1 mit der Ziffer 15 markierten Pfeil. Eine der Belegführung zum Belegeinlauf dienende Vorrichtung ist in der Zeichnung nicht dargestellt. Die an den beiden Umlenkrollen 9 und 13 ankommenden blattförmigen Gegenstände werden zunächst von der über die erste Umlenkrolle 9 geführten ersten Folie 7 erfasst und anschließend der um die zweite Umlenkrolle 13 geführten zweiten Folie 11 zugeführt. Diese zeitlich versetzte Kontaktierung der ersten und zweiten Umlenkrolle 9 und 13 erfolgt aufgrund eines Versatzes zwischen den beiden Umlenkrollen. Ab der zweiten Umlenkrolle 13 werden die ersten und zweiten Folien 7 und 11 aneinander gedrückt und die dazwischen angeordneten blattförmigen Gegenstände gehalten. Aufgrund der Kraft, die die beiden Umlenkrollen 9 und 13 sowie die beiden Stützrollen 10 und 14 auf die erste und zweite Folie und damit auf die blattförmigen Gegenstände zwischen den Folien ausüben sowie die zwischen den blattförmigen Gegenständen und den Folien bestehende Reibung bleibt die Position der blattförmigen Gegenstände relativ zu den Folien von den beiden Umlenkrollen 9 und 13 bis zu der Wickeltrommel 1 erhalten. Sobald sich die Gegenstände auf der Wickeltrommel befinden, verändert sich ihre Position bei ausreichenden Spannung der Folien ebenfalls nicht mehr. Zwischen den beiden Umlenkrollen 9 und 13 und der Wickeltrommel 1 erfahren die beiden Folien 7 und 11 sowie die dazwischen angeordneten blattförmigen Gegenstände aufgrund der beiden Stützrollen 10 und 14 mehrere Richtungsänderungen. Aufgrund dieser Richtungsänderungen werden zusätzliche Kräfte auf die beiden Folien und die dazwischen angeordneten blattförmigen Gegenstände ausgeübt. Der Abstand zwischen den beiden Umlenkrollen 9 und 13 der ersten Stützrolle 10, der zweiten Stützrolle 14 und der Wickeltrommel 1 ist so gewählt, dass selbst der kleinste blattförmige Gegenstand zwischen der ersten Umlenkrolle 9 und der Wickeltrommel 1 stets in Kontakt mit mindestens einer Umlenkrolle oder mindestens einer Stützrolle ist. Die Folien werden an den beiden Umlenkrollen 9 und 13 sowie an den beiden Stützrollen 10 und 14 nicht nur tangential vorbeigeführt sondern in eine andere Richtung umgelenkt, wodurch der Kontakt zwischen Folie und Umlenkrolle sowie zwischen Folie und Stützrolle über einen größeren Folienabschnitt erfolgt und die ausgeübte Kraft gesteigert wird.

Der Belegauslauf erfolgt, indem die beiden Folien 7 und 11 über die beiden Stützrollen 10 und 14, die beiden Umlenkrollen 9 und 13 und die Führungsrollen 8 und 12 auf die Folientrommeln 3 und 4 aufgewickelt werden. Die blattförmigen Gegenstände werden zwischen den beiden Umlenkrollen 9 und 13 in horizontaler Richtung entgegengesetzt zu dem Pfeil 15 aufgegeben.

Figur 2 zeigt die beiden ersten Umlenkrollen 9 und die beiden zweiten Umlenkrollen 13 in einer Ansicht von vorne. Die Blickrichtung entspricht dabei dem im Figur 1 mit einem Pfeil 15 markierten Belegeinlauf. Jede der Umlenkrollen 9 und 13 ist um eine Achse 16 und 17 drehbar gelagert. In axialem Abstand zu den beiden ersten Umlenkrollen 9 ist jeweils eine Scheibe 18 an der der jeweils anderen ersten Umlenkrolle abgewandten Seite drehbar an der Achse 16 angeordnet. Dabei sorgt ein in der Zeichnung nicht erkennbarer Abstandshalter dafür, dass der Abstand zwischen den ersten Umlenkrollen 9 und den Scheiben 18 konstant bleibt. Entsprechende Scheiben 19 sind an den Achsen 17 der zweiten Umlenkrollen 13 angeordnet. Im Unterschied zu den Scheiben 18 sind die Scheiben 19 zwischen den beiden zweiten Umlenkrollen positioniert. Der Durchmesser der beiden Scheiben 18 und 19 ist größer als der Durchmesser der ersten und zweiten Umlenkrollen 9 und 13. Dies führt dazu, dass ein blattförmiger Gegenstand 20 bei seinem Transport zwischen den ersten und zweiten Umlenkrollen 9 und 13 durch die Scheiben 18 und 19 eine mäander oder wellenförmige Verformung erfährt. Diese Auslenkung des blattförmigen Gegenstandes 20 ist in Figur 2 dargestellt. Der blattförmige Gegenstand ist in der Mitte zwischen den Umlenkrollen 9 und 13 durch die Scheiben nach oben gekrümmt und an den Seiten nach unten.

In Figur 2 sind zusätzlich zu den Umlenkrollen 9 und 13 auch die ersten Folien 7 und die beiden Stützrollen 10 dargestellt, obwohl diese bei der Blickrichtung entsprechend der Richtung des Belegeinlaufs durch die beiden Umlenkrollen 9 und 13 verdeckt sind. Aus dieser nicht der Realität entsprechenden Darstellung wird jedoch deutlich, dass die beiden Folien 7 parallel nebeneinander verlaufen, und dass ein blattförmiger Gegenstand 20 von beiden Folien 7 und den darunter liegenden Folien 11 transportiert wird.

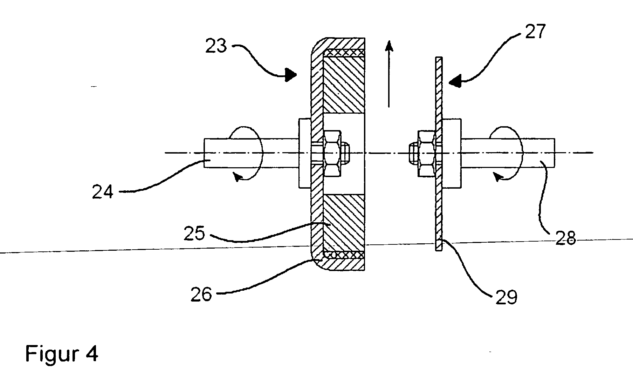

In Figur 3 sind die beiden ersten Folientrommeln 3 und die gemeinsame Antriebswelle 5 dargestellt. Das Drehmoment der Antriebswelle 5 wird jeweils über eine Hysteresekupplung 21 und eine Drehfeder 22 auf die Folientrommel übertragen. Die Hysteresekupplung 21 ist in Figur 3 mit einem Kupplungsgehäuse dargestellt. Figur 4 zeigt die Hysteresekupplung 21 ohne Gehäuse. Die erste Kupplungshälfte 23 der Hysteresekupplung 21 besteht aus einem ersten Achsstummel 24 und aus einem oder mehreren Magneten 25, die in einer Magnethalterung 26 aus Weicheisen angeordnet sind. Die zweite Kupplungshälfte 27 besteht aus einem zweiten Achsstummel 28 und einer Scheibe 29 aus einem Hysteresewerkstoff mit großer Remanenz und Permeabilität und kleiner Koerzitivfeldstärke. Aufgrund der zwischen den Magneten 25 und der Scheibe 29 wirkenden magnetischen Kraft wird das Drehmoment des ersten Achsstummels 24 auf den zweiten Achsstummel 28 übertragen. Welcher der beiden Achsstummel 28 und 29 mit der Antriebswelle 5 verbunden ist, ist dabei unerheblich.

In Figur 3 ist die erste Kupplungshälfte 23 der Hysteresekupplung 21 mit der Antriebswelle 5 mechanisch verbunden. Die zweite Kupplungshälfte 27 der Hysteresekupplung 21 ist über einen Spulenadapter 30 an ein Ende der Drehfeder 22 gekoppelt. Das andere Ende der Drehfeder 22_ist_an der Folientrommel 3 befestigt. Die Folientrommel 3 ist zusätzlich über ein Rillenkugellager 31 mit der Antriebswelle 5 verbunden. Sind die beiden Kupplungshälften 23 und 27 miteinander verkoppelt, so wird das Drehmoment der Antriebswelle 5 über die Hysteresekupplung 21 auf die Folientrommel 3 übertragen. Sind die beiden Kupplungshälften 23 und 27 wunschgemäß entkoppelt oder rutscht die Hysteresekupplung 21 durch, so ist die Folientrommel aufgrund des Rillenkugellagers 31 gegenüber der Antriebswelle 5 frei drehbar.

Die beiden Folientrommeln 4 sind in Übereinstimmung mit den beiden Folientrommeln 3 ebenfalls mit einer Kombination aus einer Hysteresekupplung und einer Drehfeder und mit einem Rillenkugellager ausgestattet. Der Aufbau stimmt gemäß Figur 3 überein. Die Hysteresekupplung, die Drehfeder und das Rillenkugellager sind mit der Hysteresekupplung 21, der Drehfeder 22 und dem Rillenkugellager 31 identisch.

Werden blattförmige Gegenstände 20 in den Rollenspeicher eingeführt und auf die Wickeltrommel 1 aufgewickelt, so wird die Wickeltrommel 1 durch einen Motor angetrieben. Die Folientrommeln 3 und 4 sind in diesem Fall von ihrem Antrieb entkoppelt und drehen sich aufgrund der Rillenkugellager frei gegenüber den Antriebswellen 5 und 6. Werden dagegen bei der Ausgabe der blattförmigen Gegenstände die Folien 7 und 11 von der Wickeltrommel ab- und auf die Folientrommeln 3 und 4 aufgewickelt, so werden die Folientrommeln 3 und 4 angetrieben und die Wickeltrommel dreht sich frei gegenüber ihrer Antriebswelle oder mit einer Drehzahl, die kleiner ist als die Drehzahl der Folientrommeln. In diesem Fall sind die Folientrommeln 3 und 4 über die Hysteresekupplungen 21 mit den Antriebwellen 5 und 6 verbunden. Erst wenn ein Belegstau oder ein Hindernis auftritt, welches dem Folientransport mit einem Drehmoment entgegenwirkt, das größer ist als das Nennmoment der Hysteresekupplungen, rutschen die Hysteresekupplungen durch.

### Bezugszeichenliste

- 1: Wickeltrommel
- 2: Wickelkern der Wickeltrommel
- 3: erste Folientrommel
- 4: zweite Folientrommel
- 5: Antriebswelle der ersten Folientrommeln
- 6: Antriebswelle der zweiten Folientrommeln
- 7: erste Folie
- 8: Führungsrolle
- 9: erste Umlenkrolle
- 10: erste Stützrolle
- 11: zweite Folie
- 12: Führungsrolle
- 13: zweite Umlenkrolle
- 14: zweite Stützrolle
- 15: Richtung des Belegeinlaufs
- 16: Achse der ersten Umlenkrollen
- 17: Achse der zweiten Umlenkrollen
- 18: Scheibe
- 19: Scheibe
- 20: blattförmiger Gegenstand
- 21: Hysteresekupplung
- 22: Drehfeder
- 23: erste Kupplungshälfte der Hysteresekupplung
- 24: erster Achsstummel
- 25: Magnet
- 26: Magnethalterung
- 27: zweite Kupplungshälfte
- 28: zweiter Achsstummel
- 29: Scheibe
- 30: Spulenadapter
- 31: Rillenkugellager

## Patentansprüche

1. Rollenspeicher zum Speichern blattförmiger Gegenstände,
wie beispielsweise Banknoten,
- mit mindestens einer durch einen Motor zur Rotation antreibbaren Folientrommel (3, 4) mit einer bandförmigen Folie (7, 11),
- mit einer durch einen Motor zur Rotation antreibbaren Wickeltrommel (1),
- wobei die Folie (7, 11) zur Aufnahme der blattförmigen Gegenstände (20) von der Folientrommel (3, 4) auf die Wickeltrommel (1) wickelbar ist und zur Ausgabe der blattförmigen Gegenstände (20) von der Wickeltrommel (1) auf die Folientrommel (3, 4) wickelbar ist,
- mit einer Hysteresekupplung (21) an der Folientrommel (3, 4) zur Übertragung des Drehmoments von einem Motor auf die Folientrommel (3, 4) und/oder mit einer Hysteresekupplung an der Wickeltrommel (21) zur Übertragung des Drehmoments von einem Motor auf die Wickeltrommel (1), **dadurch gekennzeichnet, daß** an der Folientrommel (3,4) eine Drehfeder (22) angeordnet ist und/oder daß die Wickeltrommel (1) mit einer Drehfeder ausgestattet ist.

2. Rollenspeicher nach Anspruch 1, **dadurch gekennzeichnet, dass** die Drehfeder (22) zwischen der Hysteresekupplung (21) und der Folientrommel (3, 4) angeordnet ist.

3. Rollenspeicher nach Anspruch 1 oder 2, **dadurch gekennzeichnet, dass** die Folientrommel mit einem Kugellager (31) ausgestattet ist.

4. Rollenspeicher nach Anspruch 3, **dadurch gekennzeichnet, dass** das Kugellager (31) ein Rillenkugellager ist.

5. Rollenspeicher nach einem der vorhergehenden Ansprüche, **dadurch gekennzeichnet, dass** der Rollenspeicher mit mindestens einer Umlenkrolle (9, 13) für die Folie (7, 11) ausgestattet ist, und dass die Umlenkrolle (9, 13) an den beiden Enden einen kleineren Durchmesser aufweist als in einem Bereich zwischen den beiden Enden.

6. Rollenspeicher nach einem der vorhergehenden Ansprüche, **dadurch gekennzeichnet, dass** der Rollenspeicher mit mindestens einer Stützrolle (10, 14) und/ oder mit mindestens einer Führungsrolle (12), für die Folie (7, 11) ausgestattet ist, und dass die Stützrolle (10, 14) und/ oder Führungsrolle (12) an den beiden Enden einen kleineren Durchmesser aufweist als in einem Bereich zwischen den beiden Enden.

7. Rollenspeicher nach Anspruch 5 oder 6, **dadurch gekennzeichnet, dass** die Umlenkrolle (9, 13) und/ oder die Stützrolle (10, 14) und/ oder die Führungsrolle (12) eine nach außen gewölbte Oberfläche aufweisen.

8. Rollenspeicher nach Anspruch 5 oder 6, **dadurch gekennzeichnet, dass** die Umlenkrolle (9, 13) und/ oder die Stützrolle (10, 14) und/ oder die Führungsrolle (12) aus zwei Kegeln oder Kegelstümpfen zusammengesetzt sind.

9. Rollenspeicher nach einem der vorhergehenden Ansprüche, **dadurch gekennzeichnet, dass** die Umlenkrolle (9, 13) zumindest an der Oberfläche des Mantels aus einem weichen, gummiartigen Material besteht.

10. Rollenspeicher nach einem der vorhergehenden Ansprüche, **dadurch gekennzeichnet, dass** zusätzlich zu einer ersten durch einen Motor zur Rotation antreibbaren Folientrommel (3) mit einer ersten bandförmigen Folie (7) als Speicherband eine zweite durch einen Motor zur Rotation antreibbare Folientrommel (4) mit einer zweiten bandförmigen Folie (11) als Deckband angeordnet ist, um die blattförmigen Gegenstände zwischen der ersten und der zweiten Folie (7, 11) zu halten,
wobei die Folien (7, 11) zur Aufnahme der blattförmigen Gegenstände (20) von den beiden Folientrommeln (3, 4) auf die Wickeltrommel (1) wickelbar sind und zur Ausgabe der blattförmigen Gegenstände (20) von der Wickeltrommel (1) auf die beiden Folientrommeln (3, 4) wickelbar sind,
wobei beide Folientrommeln (3,4) mit einer Hysteresekupplung (21) ausgestattet sind.

11. Rollenspeicher nach Anspruch 10, **dadurch gekennzeichnet, dass** beide Folientrommeln (3, 4) mit einer Drehfeder (22) ausgestattet sind.

## Claims

1. Storage roller for storing sheet-like articles, for example bank notes,
- having at least one film drum (3, 4) which can be driven in rotation by a motor and has a belt-like film (7, 11),
- having a winding drum (1) which can be driven in rotation by a motor,
- it being possible for the film (7, 11) to be wound from the film drum (3, 4) onto the winding drum (1) for the purpose of receiving the sheet-like articles (20), and to be wound from the winding drum (1) onto the film drum (3, 4) for the purpose of outputting the sheet-like articles (20)
- having a hysteresis coupling (21) on the film drum (3, 4) for the purpose of transmitting the torque from a motor to the film drum (3, 4) and/or having a hysteresis coupling on the winding drum (21) for the purpose of transmitting the torque from a motor to the winding drum (1), **characterized in that** a torsion spring (22) is arranged on the film drum (3, 4) and/or **in that** the winding drum (1) is equipped with a torsion spring.

2. Storage roller according to Claim 1, **characterized in that** the torsion spring (22) is arranged between the hysteresis coupling (21) and the film drum (3, 4).

3. Storage roller according to Claim 1 or 2, **characterized in that** the film drum is equipped with a ball bearing (31).

4. Storage roller according to Claim 3, **characterized in that** the ball bearing (31) is a grooved ball bearing.

5. Storage roller according to one of the preceding claims, **characterized in that** the storage roller is equipped with at least one deflection roller (9, 13) for the film (7, 11), and **in that** the deflection roller (9, 13) has a smaller diameter at the two ends than in a region between the two ends.

6. Storage roller according to one of the preceding claims, **characterized in that** the storage roller is equipped with at least one support roller (10, 14) and/or with at least one guide roller (12) for the film (7, 11), and **in that** the support roller (10, 14) and/or the guide roller (12) has a smaller diameter at the two ends than in a region between the two ends.

7. Storage roller according to Claim 5 or 6, **characterized in that** the deflection roller (9, 13) and/or the support roller (10, 14) and/or the guide roller (12) have an outwardly curved surface.

8. Storage roller according to Claim 5 or 6, **characterized in that** the deflection roller (9, 13) and/or the support roller (10, 14) and/or the guide roller (12) are/is made up of two cones or truncated cones.

9. Storage roller according to one of the preceding claims, **characterized in that** the deflection roller (9, 13) is composed of a soft, rubber material at least at the surface of the casing.

10. Storage roller according to one of the preceding claims, **characterized in that**, in addition to a first film drum (3) which can be driven in rotation by a motor and has a first belt-like film (7) as a storage belt, a second film drum (4) which can be driven in rotation by a motor and has a second belt-like film (11) is provided as a cover belt in order to hold the sheet-like articles between the first and the second films (7, 11), it being possible for the films (7, 11) to be wound from the two film drums (3, 4) onto the winding drum (1) for the purpose of receiving the sheet-like articles (20) and to be wound from the winding drum (1) onto the two film drums (3, 4) for the purpose of outputting the sheet-like articles (20), with the two film drums (3, 4) being equipped with a hysteresis coupling (21).

11. Storage roller according to Claim 10, **characterized in that** the two film drums (3, 4) are equipped with a torsion spring (22).

## Revendications

1. Dispositif de stockage à rouleaux servant à stocker des objets sous forme de feuille, tels que par exemple des billets de banque ;
- avec au moins un tambour à film (3, 4) équipé d'un film en forme de bande (7, 11) pouvant être entraîné en rotation par un moteur ;
- avec un tambour d'enroulement (1) pouvant être entraîné en rotation par un moteur ;
- le film (7, 11) pouvant être enroulé sur le tambour d'enroulement (1) pour recevoir des objets (20) sous forme de feuille provenant du tambour à film (3, 4) et pouvant être enroulé sur le tambour à film (3, 4) pour sortir des objets (20) sous forme de feuille provenant du tambour d'enroulement (1) ;
- avec un couplage à hystérésis (21) disposé au niveau du tambour à film (3, 4) pour la transmission du couple de rotation d'un moteur au tambour à film (3, 4) et/ou avec un couplage à hystérésis disposé au niveau du tambour d'enroulement (21) pour la transmission du couple de rotation d'un moteur au tambour d'enroulement (1) ;
**caractérisé en ce qu'**un ressort de torsion (22) est disposé au niveau du tambour à film (3, 4) et/ou que le tambour d'enroulement (1) est équipé d'un ressort de torsion.

2. Dispositif de stockage à rouleaux selon la revendication 1, **caractérisé en ce que** le ressort de torsion (22) est disposé entre le couplage à hystérésis (21) et le tambour à film (3, 4).

3. Dispositif de stockage à rouleaux selon la revendication 1 ou 2, **caractérisé en ce que** le tambour à film est équipé d'un palier de roulement sphérique (31).

4. Dispositif de stockage à rouleaux selon la revendication 3, **caractérisé en ce que** le palier de roulement sphérique (31) est un palier de roulement sphérique à rainure.

5. Dispositif de stockage à rouleaux selon l'une quelconque des revendications précédentes, **caractérisé en ce que** le dispositif de stockage à rouleaux est équipé d'au moins un rouleau de déviation (9, 13) du film (7, 11) et que le rouleau de déviation (9, 13) comporte un plus petit diamètre au niveau des deux extrémités que dans une région située entre les deux extrémités.

6. Dispositif de stockage à rouleaux selon l'une quelconque des revendications précédentes, **caractérisé en ce que** le dispositif de stockage à rouleaux est équipé d'au moins un rouleau de support (10, 14) et/ou d'au moins un rouleau de guidage (12) pour le film (7, 11) et que le rouleau de support (10, 14) et/ou le rouleau de guidage (12) présente un plus petit diamètre au niveau des deux extrémités que dans une région située entre les deux extrémités.

7. Dispositif de stockage à rouleaux selon la revendication 5 ou 6, **caractérisé en ce que** le rouleau de déviation (9, 13) et/ou le rouleau de support (10, 14) et/ou le rouleau de guidage (12) comportent une surface cintrée vers l'extérieur.

8. Dispositif de stockage à rouleaux selon la revendication 5 ou 6, **caractérisé en ce que** le rouleau de déviation (9, 13) et/ou le rouleau de support (10, 14) et/ou le rouleau de guidage (12) sont composés de deux cônes ou de deux cônes émoussés.

9. Dispositif de stockage à rouleaux selon l'une quelconque des revendications précédentes, **caractérisé en ce que** le rouleau de déviation (9, 13) se compose, au moins au niveau de la surface de l'enveloppe, d'une matière souple de type caoutchouc.

10. Dispositif de stockage à rouleaux selon l'une quelconque des revendications précédentes, **caractérisé en ce qu'**en sus d'un premier tambour à film (3) équipé d'un premier film en forme de bande (7) prenant la forme d'un élément de stockage à bande et pouvant être entraîné en rotation par un moteur, un deuxième tambour à film (4) équipé d'un deuxième film en forme de bande (11) servant de bande de recouvrement et pouvant être entraîné en rotation par un moteur est prévu pour retenir les objets sous forme de feuille entre le premier et le deuxième film (7, 11) ;
les films (7, 11) pouvant être enroulés sur le tambour d'enroulement (1) pour recevoir les objets (20) sous forme de feuille provenant des deux tambours à film (3, 4) et pouvant être enroulés sur les deux tambours à film (3, 4) pour sortir les objets (20) sous forme de feuille hors du tambour d'enroulement (1) ;
les deux tambours à film (3, 4) étant équipés d'un couplage à hystérésis (21).

11. Dispositif de stockage à rouleaux selon la revendication 10, **caractérisé en ce que** les deux tambours à film (3, 4) sont équipés d'un ressort de torsion (22).
